# EUROPEAN PATENT SPECIFICATION

(11) **EP 3 654 467 B1**
(45) Date of publication and mention of the grant of the patent: **11.05.2022**
(21) Application number: 18206631.6
(22) Date of filing: 16.11.2018
(51) Int. Cl.: H02B 1/40, F16B 5/02, H02B 1/01, A47B 95/00, F16B 21/09

(54) **WALL MOUNTING DEVICE FOR DISTRIBUTION CABINETS**
WANDBEFESTIGUNGSVORRICHTUNG FÜR VERTEILERSCHRÄNKE
DISPOSITIF DE MONTAGE MURAL POUR ARMOIRES DE DISTRIBUTION

(43) Date of publication of application: 20.05.2020
(73) Proprietor: ABB Schweiz AG, 5400 Baden (CH)
(72) Inventor: Roth, Michael, 77880 Sasbach (DE); Weber, Erik, 67850 Offendorf (FR); Ringwald, Konrad, 77880 Sasbach (DE)
(74) Representative: Wesch, Arno

(56) References cited:
- WO-A1-2013/160186
- DE-A1- 19 859 234
- JP-A- S56 129 506

## Description

The invention is related to a device to mount a distribution cabinet to a wall according to the preamble of claim 1.

WO 2013/160 186 A1 shows an adjustment device to maintain the flatness of a touch screen comprising two separated holes, which are each penetrated by a screwlike component. JP S56 129506 A and DE 198 59 234 A1 show devices comprising two screwlike components, wherein one first screwlike component penetrates through a second one.

Currently, distribution cabinets often are arranged and fixed in front of and/or on a wall. Often the distribution cabinet is connected to this wall using mounting screws. Such screws protrude through the rear panel of the distribution cabinet and are driven into the wall to fix the distribution cabinet to this wall.

The mounting screws are accessible from a front side of the distribution cabinet.

When the mounting screws are tightened, a rear panel and/ or the cabinet may be deformed or distorted, if the wall is uneven or unequal.

Currently, any user, especially an electrician, has problems to compensate an uneven wall, to which a distribution cabinet shall be connected. Often a user tries to compensate the unevenness with a homemade solution.

The object of the invention therefore is to develop a distribution cabinet, whose position on and/or in front of a wall may be adjusted easily and accurately defined.

The object of the invention is achieved by means of the features of claim 1.

According to this claim the base body also comprises a compensation screw, which is received in the base body and is configured to be turned relatively to the base body to create a gap or distance between a rear panel of the distribution cabinet and the wall.

According to the invention it has been found that a distribution cabinet can be adjusted in its right position on and/or in front of a wall or a bottom wall. The distribution cabinet can be levelled using the device according to the invention. In the case of an uneven wall, the adjusting of the rear panel using a compensation screw gives the possibility to adjust the position of the cabinet as a whole. A levelling of the cabinet is possible. The invention is applicable for each type and number of mounting screws. Especially the device can be used, when only one mounting screw is used.

Advantageously, the compensation screw is connected with a threaded shaft in a torque proof manner, wherein the threaded shaft is received in a mating thread, which is connected with the base body. Through this, the end of the compensation screw may be supported on or against the wall, while turning the compensation screw. This creates a counterforce, which moves the base body and the rear panel relatively to wall. The position of the rear panel may be adjusted.

Advantageously, the compensation screw is made of or at least covered by an insulating material, such as a plastic material. The mounting screw may be configured as a standard metal screw.

The base body has a slot without a mating thread to receive the mounting screw. Through this, the mounting screw can mate with a thread in the wall or with a dowel in the wall and can draw and/ or press the rear panel against the wall.

The base body has a cutout, through which the compensation screw may protrude in the direction of the wall, wherein the cutout leads into the slot. The compensation screw and the mounting screw can be arranged in a space saving manner. The installation of the rear panel on the wall is simplified. The slot and the cutout preferably are configured like a key hole, having only one opening.

Advantageously, the surrounding contour of the cutout is configured to form the mating thread in which the threaded shaft of the compensation screw is received. For this purpose, the surrounding contour of the cutout may be configured in the form of at least one or two convolutions of the mating thread in which the threaded shaft of the compensation screw is received. Configuring the surrounding contour of the cut-out in the form of at least one or two convolutions of the mating thread is in the context of this invention regarded as an embodiment of connecting the mating thread with the base body.

Further advantageously, the base body may be fixed by fixing means to a rear panel. The device may be arranged on different types of distribution cabinets. The fixing means may be screws. It is also possible, that the base body is integrated into the rear panel or that the rear panel or a part of the rear panel is the base body.

Advantageously, the mounting screw is located above the compensation screw. The installation of the rear panel on the wall is simplified. The rear panel may be hinged on a mounting screw driven into the wall. The slot, which is closed on one side surrounds the mounting screw. The head of the mounting screw may easily pass the cutout of the compensation screw, which has a bigger diameter than the slot. The device acts as a loop or an eye and the mounting screw acts as a hook.

Further, advantageously, the mounting screw has a hexagonal head and may be fixed by a hex wrench. A hex wrench is a common tool, which is easy to operate.

Advantageously, a rear panel comprises a device as described here. Through this, a cabinet, especially an electric cabinet, may be adjusted being fixed to a wall.

Further advantageously, an arrangement comprises a wall and a rear panel as described here, wherein the compensation screw is accessible and turnable in front of the front side of the rear panel and wherein the compensation screw protrudes with one end to the wall and lies against this wall creating a distance between the back side of the rear panel and the wall. The compensation screw may adjust the position of the rear panel relative to the wall. The mounting screw preferably is also accessible in front of the front side of the rear panel.

Advantageously, the head of the mounting screw lies against the base body, wherein the mounting screw rotatably may protrude with its thread in the direction of the wall and wherein the base body has a cutout, through which the compensation screw may protrude in the direction of the wall. The rear panel may be fixed and adjusted in one step or two steps turning one screw or both said screws.

Further advantageously, the mounting screw mates with a thread in the wall or a thread received in the wall. The rear panel may be reversibly fixed to the wall.

Advantageously, the mounting screw and the compensation screw go through the rear panel to reach the wall. The rear panel may have holes or cutouts to receive the compensation screw and/ or the mounting screw. There is no need to drill any holes into the rear panel. Holes and cutouts are designed in a factory-provided manner.

Preferably, the arrangement comprises a distribution cabinet or any other cabinet, which houses electrical components. It is possible, that more than one device is arranged on a rear panel or on any other panel or part of a panel, which is directed to a wall, which may be uneven. The mounting screw, pre-assembled in the wall, may be tightened, when the compensation screw has defined a correct position of the cabinet.

In the drawings:
- Fig. 1: shows a perspective view of a cabinet, comprising a device, having a compensation screw and a mounting screw, wherein the device is fixed on the front side of a rear panel and wherein the back side of the rear panel is directed to an uneven wall,
- Fig. 2: shows a perspective view of a further cabinet, comprising a further device, having a compensation screw and a mounting screw, wherein the device is fixed on the front side of a rear panel, wherein the back side of the rear panel is directed to an uneven wall and wherein the mounting screw is located above the compensation screw,
- Fig. 3: shows a perspective view of the cabinet according to Fig. 1, wherein the compensation screw is omitted, and
- Fig. 4: shows in detail the arrangement of Fig. 1 in a sectional view according to the intersecting plane shown in Fig. 1 and 3 by a dashed line.
- Fig. 5: shows a side view of a cabinet, comprising a device with a mounting screw and compensation screw, wherein the device is used on the top and on the bottom from the cabinet, wherein the back side of the rear panel is directed to an uneven wall and wherein the mounting screw is located above the compensation screw,

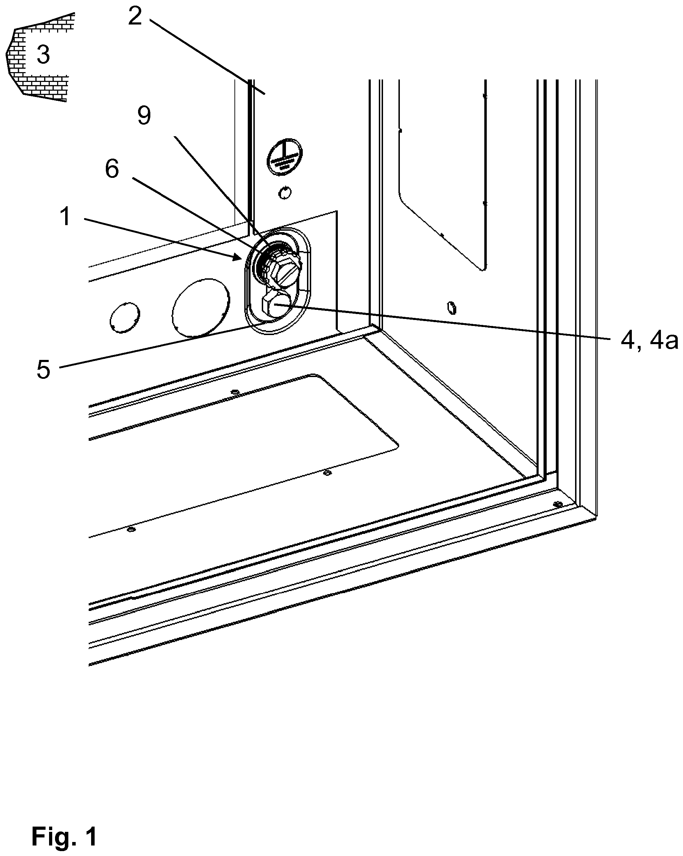

Fig. 1 shows a device 1 to mount a distribution cabinet 2 to a wall 3, comprising a mounting screw 4, which is received in a base body 5 and which may be turned relatively to the base body 5. The base body 5 also comprises a compensation screw 6, which is received in the base body 5 and which may be turned relatively to the base body 5 to create a gap or distance 13 between a rear panel 7 of the distribution cabinet 2 and the wall 3.

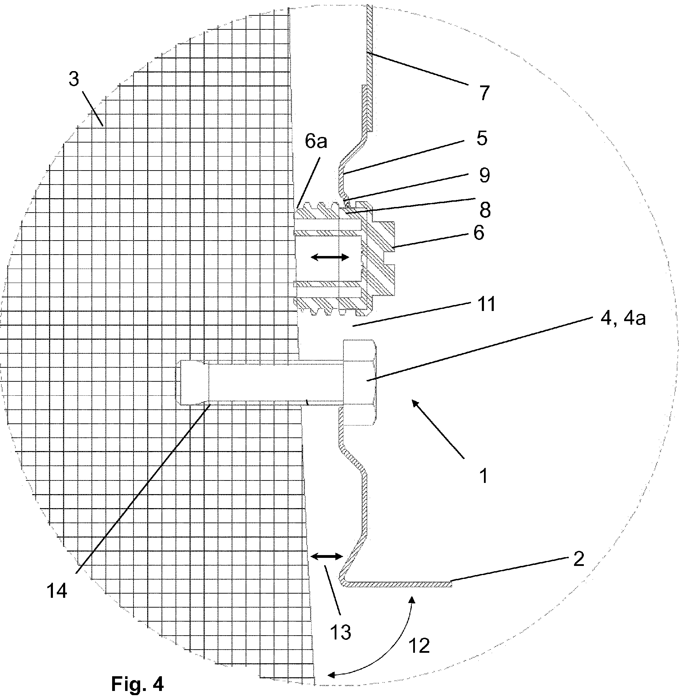

Fig. 4 shows in detail that the compensation screw 6 comprises a threaded shaft 8 and insofar is connected with this threaded shaft 8 in a torque proof manner, wherein the threaded shaft 8 is received in a mating thread 9, which is connected with the base body 5.

The mating thread 9 is realized in such a way that the surrounding contour of the cutout is configured in the form of at least one or two convolutions of the mating thread 9 in which the threaded shaft 8 of the compensation screw 6 is received. Of course one can think of other ways of connecting a mating thread with the base body 5, too.

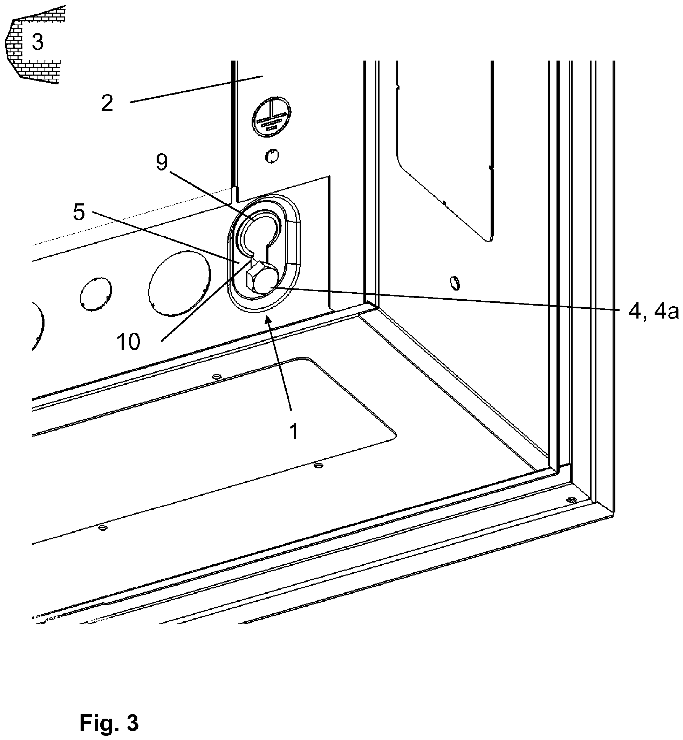

Fig. 1 to 4 show, that the base body 5 has a slot 10 with a mating thread 9 to receive the mounting screw 4. Fig. 1 to 4 show, that the base body 5 has a cutout 11, through which the compensation screw 6 protrudes in the direction of the wall 3, wherein the cutout 11 leads into the slot 10. The slot 10 and the cutout 11 are configured like a key hole, having only one opening. Fig. 1 to 5 show that the base body 5 is fixed to the rear panel 7.

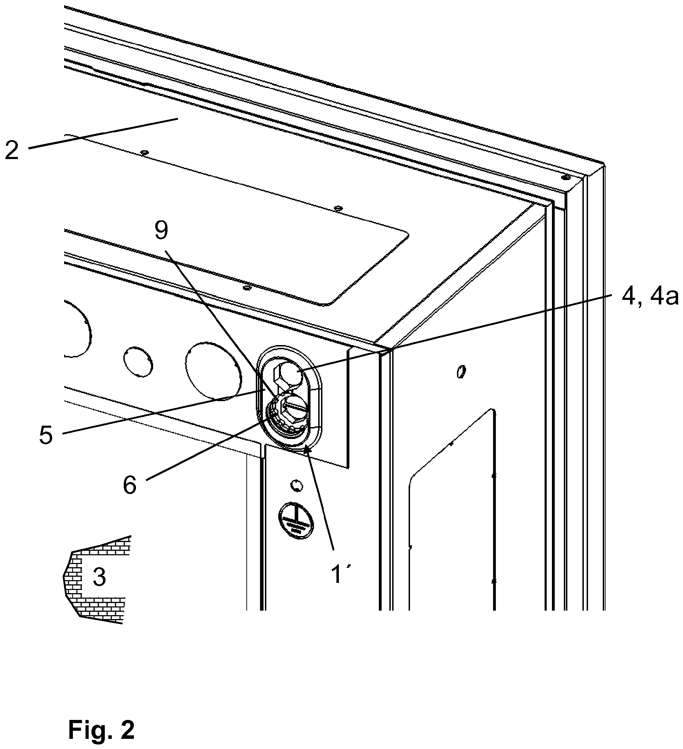

Fig. 2 shows with respect to a device 1', that the mounting screw 4 is located above the compensation screw 6. Fig. 1 to 4 show, that the mounting screw 4 has a hexagonal head 4a and may be fixed by a hex wrench.

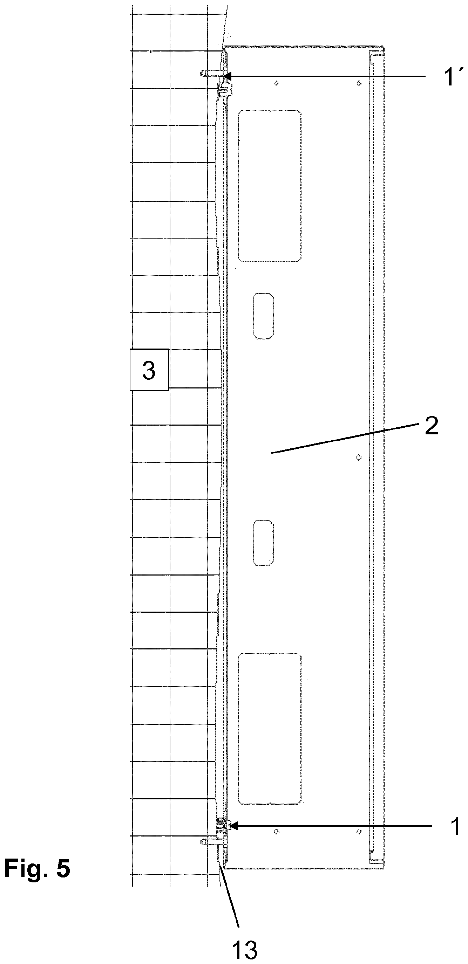

Fig. 5 show, that the rear panel 7, comprises a device 1 another device 1'.

Fig. 1 to 5 show an arrangement, comprising an uneven wall 3 and a rear panel 7, wherein the compensation screw 6 is accessible and turnable in front of the front side of the rear panel 7 and wherein the compensation screw 6 protrudes with one end 6a to the wall 3 and lies against this wall 3, creating a gap or distance 13 between the back side of the rear panel 7 and the wall 3.

In Fig. 4 and 5 it is shown, that the wall 3 is uneven. Fig. 4 also shows, that the head 4a of the mounting screw 4 lies against the base body 5, wherein the mounting screw 4 rotatably protrudes with its thread in the direction of the wall 3 and wherein the base body 5 has a cutout 11, through which the compensation screw 6 protrudes in the direction of the wall 3. The mounting screw 4 mates with a thread 14 in the wall 3. Fig. 4 also shows, that the mounting screw 4 and the compensation screw 6 go through the rear panel 7 to reach the wall 3.

**Reference numbers**

| | |
|---|---|
| 1, 1' | Device |
| 2 | Cabinet |
| 3 | Wall |
| 4 | Mounting screw |
| 4a | Head of 4 |
| 5 | Base body of 1, 1' |
| 6 | Compensation screw |
| 6a | End of 6 |
| 7 | Rear panel of 2 |
| 8 | Threaded shaft |
| 9 | Mating thread of 5 |
| 10 | Slot |
| 11 | Cutout |
| 12 | Tilt angle |
| 13 | Gap or distance between 2 and 3 |
| 14 | Thread of 3 |

## Claims

1. Device (1, 1') to mount a distribution cabinet (2) to a wall (3), the device comprising at least one mounting screw (4), which is received in a base body (5) and is configured to be turned relatively to the base body (5), wherein the base body (5) also comprises a compensation screw (6), which is received in the base body (5) and is configured to be turned relatively to the base body (5) to create a gap or distance (13) between a rear panel (7) of the distribution cabinet (2) and the wall (3), wherein the base body (5) has a cut-out (11) through which the compensation screw (6) is configured to protrude in the direction of the wall (3), **characterized in that**, the base body (5) has a slot (10) without a mating thread to receive the mounting screw (4), and the cut-out (11) leads into the slot (10).

2. Device according to claim 1, **characterized in that** the compensation screw (6) is connected with a threaded shaft (8) in a torque proof manner, wherein the threaded shaft(8) is received in a mating thread (9), which is connected with the base body (5) in a torque proof manner.

3. Device according to one of the preceding claims, **characterized in that** the base body (5) is configured to be fixed to a rear panel (7) of the distribution cabinet (2).

4. Device according to one of the preceding claims, **characterized in that** the mounting screw (4) has a hexagonal head (4a) and may be fixed by a hex wrench.

5. Rear panel (7), comprising a device (1, 1') according to one of the preceding claims.

6. Arrangement, comprising a wall (3) and a rear panel (7) according to claim 5, wherein the compensation screw (6) is accessible and turnable in front of the front side of the rear panel (7) and wherein the compensation screw (6) protrudes with one end (6a) to the wall (3) and lies against this wall (3), creating a gap or distance (13) between the back side of the rear panel (7) and the wall (3).

7. Arrangement according to claim 6, **characterized in that** the head (4a) of the mounting screw (4) lies against the base body (5), wherein the mounting screw (4) rotatably protrudes with its thread in the direction of the wall (3) and wherein the compensation screw (6) protrudes through the cut-out (11) of the base body (5) in the direction of the wall (3).

8. Arrangement according to claim 6 or 7, **characterized in that** the mounting screw (4) mates with a thread (14) in the wall (3) or a thread (14) received in the wall (3).

9. Arrangement according to one of the claims 6 to 8 , **characterized in that** the mounting screw (4) and the compensation screw (6) go through the rear panel (7) to reach the wall (3).

10. Arrangement according to one of the claims 6 to 9, **characterized in that** the mounting screw (4) is located above the compensation screw (6).

11. Arrangement according to one the claims 6 to 10, **characterized in that** the rear panel (7) is a rear panel (7) of a cabinet (2).

12. Arrangement according to one the claims 6 to 11, **characterized in that** the rear panel (7) is a rear panel (7) of a distribution cabinet (2).

13. Arrangement according to one the claims 6 to 12, **characterized in that** the rear panel (7) comprises several devices (1, 1').

## Patentansprüche

1. Vorrichtung (1, 1') zum Montieren eines Verteilerschrankes (2) an einer Wand (3), wobei die Vorrichtung mindestens eine Montageschraube (4) umfasst, die in einem Basiskörper (5) aufgenommen ist und dafür ausgelegt ist, relativ zum Basiskörper (5) gedreht zu werden, wobei der Basiskörper (5) außerdem eine Ausgleichsschraube (6) umfasst, die im Basiskörper (5) aufgenommen ist und dafür ausgelegt ist, relativ zum Basiskörper (5) gedreht zu werden, damit ein Spalt oder ein Abstand (13) zwischen einer Rückwand (7) des Verteilerschrankes (2) und der Wand (3) entsteht, wobei der Basiskörper (5) einen Ausschnitt (11) aufweist, durch den die Ausgleichsschraube (6) zum Vorstehen in Richtung der Wand (3) ausgelegt ist,
**dadurch gekennzeichnet, dass** der Basiskörper (5) einen Schlitz (10) ohne Gegengewinde zur Aufnahme der Montageschraube (4) aufweist und der Ausschnitt (11) in den Schlitz (10) mündet.

2. Vorrichtung nach Anspruch 1, **dadurch gekennzeichnet, dass** die Ausgleichsschraube (6) mit einem Gewindeschaft (8) drehfest verbunden ist, wobei der Gewindeschaft (8) in einem Gegengewinde (9) aufgenommen ist, das drehfest mit dem Basiskörper (5) verbunden ist.

3. Vorrichtung nach einem der vorhergehenden Ansprüche, **dadurch gekennzeichnet, dass** der Basiskörper (5) zum Befestigen an einer Rückwand (7) des Verteilerschrankes (2) ausgelegt ist.

4. Vorrichtung nach einem der vorhergehenden Ansprüche, **dadurch gekennzeichnet, dass** die Montageschraube (4) einen Sechskantkopf (4a) aufweist und mit einem Sechskantschlüssel befestigt werden kann.

5. Rückwand (7), umfassend eine Vorrichtung (1, 1') nach einem der vorhergehenden Ansprüche.

6. Anordnung, umfassend eine Wand (3) und eine Rückwand (7) nach Anspruch 5, wobei die Ausgleichsschraube (6) vor der Vorderseite der Rückwand (7) zugänglich und drehbar ist und wobei die Ausgleichsschraube (6) mit einem Ende (6a) zur Wand (3) hin vorsteht und an dieser Wand (3) anliegt, wodurch ein Spalt oder ein Abstand (13) zwischen der Rückseite der Rückwand (7) und der Wand (3) entsteht.

7. Anordnung nach Anspruch 6, **dadurch gekennzeichnet, dass** der Kopf (4a) der Montageschraube (4) am Basiskörper (5) anliegt, wobei die Montageschraube (4) mit ihrem Gewinde in Richtung der Wand (3) drehbar vorsteht und wobei die Ausgleichsschraube (6) durch den Ausschnitt (11) des Basiskörpers (5) in Richtung der Wand (3) vorsteht.

8. Anordnung nach Anspruch 6 oder 7, **dadurch gekennzeichnet, dass** die Montageschraube (4) mit einem Gewinde (14) in der Wand (3) oder einem in der Wand (3) aufgenommenen Gewinde (14) zusammenpasst.

9. Anordnung nach einem der Ansprüche 6 bis 8, **dadurch gekennzeichnet, dass** die Montageschraube (4) und die Ausgleichsschraube (6) durch die Rückwand (7) zur Wand (3) geführt sind.

10. Anordnung nach einem der Ansprüche 6 bis 9, **dadurch gekennzeichnet, dass** die Montageschraube (4) oberhalb der Ausgleichsschraube (6) angeordnet ist.

11. Anordnung nach einem der Ansprüche 6 bis 10, **dadurch gekennzeichnet, dass** die Rückwand (7) eine Rückwand (7) eines Schrankes (2) ist.

12. Anordnung nach einem der Ansprüche 6 bis 11, **dadurch gekennzeichnet, dass** die Rückwand (7) eine Rückwand (7) eines Verteilerschrankes (2) ist.

13. Anordnung nach einem der Ansprüche 6 bis 12, **dadurch gekennzeichnet, dass** die Rückwand (7) mehrere Vorrichtungen (1, 1') umfasst.

## Revendications

1. Dispositif (1, 1') pour la fixation d'un coffret de distribution (2) à un mur (3), le dispositif comprenant au moins une vis de montage (4), qui est reçue dans un corps de base (5) et est conçue pour être tournée par rapport au corps de base (5), le corps de base (5) comprenant également une vis de compensation (6), qui est reçue dans le corps de base (5) et est conçue pour être tournée par rapport au corps de base (5) afin de créer un espace ou une distance (13) entre un panneau arrière (7) du coffret de distribution (2) et le mur (3), le corps de base (5) comportant une ouverture (11) à travers laquelle la vis de compensation (6) est conçue pour faire saillie dans la direction du mur (3),
**caractérisé en ce que**
le corps de base (5) comporte une fente (10) sans filetage d'accouplement destinée à recevoir la vis de montage (4) et l'ouverture (11) mène à la fente (10).

2. Dispositif selon la revendication 1, **caractérisé en ce que** la vis de compensation (6) est raccordée à une tige filetée (8) d'une manière anticouple, la tige filetée (8) étant reçue dans un filetage d'accouplement (9), qui est raccordé au corps de base (5) d'une manière anticouple.

3. Dispositif selon l'une des revendications précédentes, **caractérisé en ce que** le corps de base (5) est conçu pour être fixé à un panneau arrière (7) du coffret de distribution (2).

4. Dispositif selon l'une des revendications précédentes, **caractérisé en ce que** la vis de montage (4) comporte une tête hexagonale (4a) et peut être fixée par une clé hexagonale.

5. Panneau arrière (7), comprenant un dispositif (1, 1') selon l'une des revendications précédentes.

6. Agencement, comprenant un mur (3) et un panneau arrière (7) selon la revendication 5, dans lequel la vis de compensation (6) est accessible et peut être tournée devant le côté avant du panneau arrière (7) et dans lequel la vis de compensation (6) fait saillie avec une extrémité (6a) en direction du mur (3) et est située contre ce mur (3), créant un espace ou une distance (13) entre le côté arrière du panneau arrière (7) et le mur (3) .

7. Agencement selon la revendication 6, **caractérisé en ce que** la tête (4a) de la vis de montage (4) est située contre le corps de base (5), la vis de montage (4) fait saillie de manière rotative avec son filetage dans la direction du mur (3) et la vis de compensation (6) fait saillie à travers l'ouverture (11) du corps de base (5) dans la direction du mur (3).

8. Agencement selon la revendication 6 ou 7, **caractérisé en ce que** la vis de montage (4) s'accouple avec un filetage (14) dans le mur (3) ou un filetage (14) reçu dans le mur (3).

9. Agencement selon l'une des revendications 6 à 8, **caractérisé en ce que** la vis de montage (4) et la vis de compensation (6) traversent le panneau arrière (7) pour atteindre le mur (3).

10. Agencement selon l'une des revendications 6 à 9, **caractérisé en ce que** la vis de montage (4) est située au-dessus de la vis de compensation (6).

11. Agencement selon l'une des revendications 6 à 10, **caractérisé en ce que** le panneau arrière (7) est un panneau arrière (7) d'un coffret (2).

12. Agencement selon l'une des revendications 6 à 11, **caractérisé en ce que** le panneau arrière (7) est un panneau arrière (7) d'un coffret de distribution (2).

13. Agencement selon l'une des revendications 6 à 12, **caractérisé en ce que** le panneau arrière (7) comprend plusieurs dispositifs (1, 1').
